(19)

**Europäisches Patentamt**
**European Patent Office**
**Office européen des brevets**

(11) **EP 1 305 136 B1**

(12) **EUROPEAN PATENT SPECIFICATION**

(45) Date of publication and mention
of the grant of the patent:
**09.12.2009 Bulletin 2009/50**

(51) Int Cl.:
**B24B 13/06** *(2006.01)*    **B24B 41/00** *(2006.01)*

(21) Application number: **01951296.1**

(22) Date of filing: **11.07.2001**

(86) International application number:
**PCT/CA2001/001012**

(87) International publication number:
**WO 2002/006005 (24.01.2002 Gazette 2002/04)**

(54) **LENS LATHE WITH VIBRATION CANCELLING ARRANGEMENT**

BRILLENGLAS BEARBEITUNGSVORRICHTUNG MIT VIBRATIONSDÄMPFUNG

TOUR A VERRES OPTIQUES A SYSTEME ANNULANT LES VIBRATIONS

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.07.2000 CA 2313830**

(43) Date of publication of application:
**02.05.2003 Bulletin 2003/18**

(73) Proprietor: **Satisloh GmbH**
**35578 Wetzlar (DE)**

(72) Inventors:
• **SAVOIE, Marc**
**35578 Wetzlar (DE)**
• **McPHERSON, Edward**
**35614 Asslar (DE)**

(74) Representative: **Oppermann, Mark et al**
**Oppermann & Oppermann**
**Patentanwälte**
**Am Wiesengrund 35**
**63075 Offenbach (DE)**

(56) References cited:
**EP-A- 0 641 626    EP-A- 0 849 038**
**WO-A-97/13603**

• **PATENT ABSTRACTS OF JAPAN vol. 014, no. 091 (M-0938), 20 February 1990 (1990-02-20) -& JP 01 301038 A (NAGASE IRON WORKS CO LTD), 5 December 1989 (1989-12-05)**
• **PATENT ABSTRACTS OF JAPAN vol. 016, no. 416 (M-1304), 2 September 1992 (1992-09-02) -& JP 04 141359 A (TOPCON CORP), 14 May 1992 (1992-05-14)**

**Description**

## FIELD OF THE INVENTION

This invention relates generally to apparatus and methods for cutting lenses and more particularly to turning lathes for cutting non-rotationally symmetrical lenses.

## BACKGROUND OF THE INVENTION

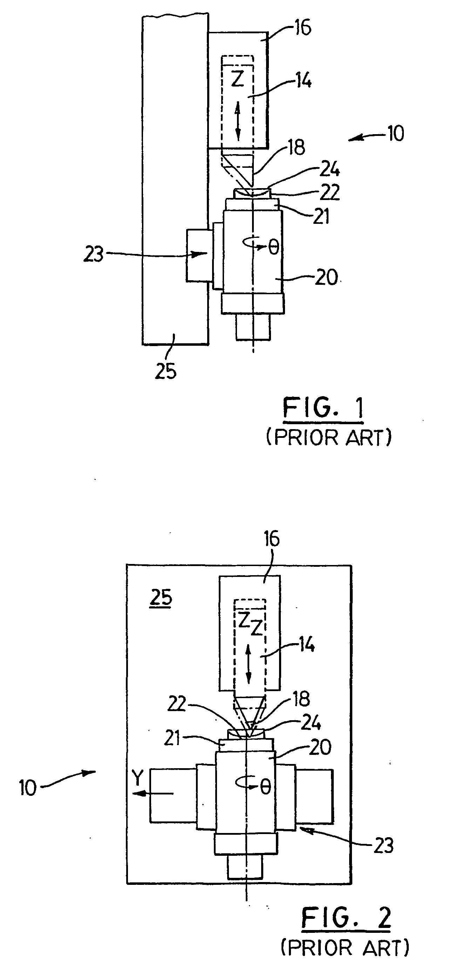

An efficient way to produce rotationally asymmetrical surfaces is with a three-axis single point diamond turning lathe. Figure 1 is an end elevation showing a typical layout for such a lathe and Figure 2 is a front elevation corresponding to Figure 1. The lathe which is generally indicated by reference 10 includes a lens supporting assembly 20 and a shuttle 14. The shuttle 14 is axially movable along a "Z axis" indicated by reference Z by an actuator 16. A lens cutting tool 18 (typically a diamond tool) is secured to the shuttle 14.

The lens supporting assembly 20 supports a lens 22 and rotates the lens 22 about a lens axis indicated by θ. The lens supporting assembly 20 is moveable in a direction Y transverse to the lens axis θ. The lens supporting member typically includes a spindle 21 which rotates the lens 20. The spindle 21 is mounted to a transversely moveable linear table 23 which in turn is mounted to a base 25 of the lathe 10.

Lens cutting is effected by a turning operation. The lens 22 is rotated at a high speed about the lens axis θ. The lens cutting tool 18 is initially placed adjacent an edge 24 of the lens 22. The lens 22 is moved in the direction Y as the lens cutting tool 18 is moved in the direction Z. Coordinated movement between the lens 22 and the lens cutting tool 18 determines the shape of the lens 22.

If the lens 22 is rotationally symmetrical, such as spherical or aspherical, the lathe 10 is operated similarly to a two axis turning lathe. The cut typically starts at the edge 24 and the lens cutting tool is moved both in the Y and Z directions (radially inwardly and toward the lens 22). In this instance, the Z position of the lens cutting tool 18 remains constant at any given radial ("Y") distance from the lens axis θ regardless of rotation about the lens axis θ.

The relative speed between the lens cutting tool 18 and the respective surface of the lens being cut diminishes to zero as the lens cutting tool 18 approaches the lens axis θ. Accordingly, a very high spindle speed in the lens supporting assembly 20 is desirable in order to maintain an acceptable and productive surfacing operation. Typical spindle speeds are on the order of 3,000 to 10,000 RPM.

When the desired lens is non-rotationally symmetrical, as for example in the case of toric or progressive lenses, the lens cutting tool 18 must move reciprocally along the Z axis at a frequency proportional to the rotational frequency. Depending on the particular lens 22 being cut, the lens cutting tool 18 may need to be moved by as much as 20 mm at the edge of the lens. In a simple toric lens this would be a substantially sinusoidal motion with a frequency twice that of the rotational frequency.

A typical actuator 16 would consist of a linear servo motor (such as a voice coil motor) in conjunction with a high speed feedback device which is desirable as being able to produce high speed linear movement at great accuracy. Although such a motor typically has only limited travel, a typical stroke being 30 mm, it may nevertheless be required to achieve velocities as high as 3 to 4 m/s. Such velocities and rapid directional changes can create peak accelerations of 50 to 100g or even higher. By way of example, if the shuttle 14 and lens cutting tool 18 have a total mass of 2kg, an actuator acceleration of 100g will develop reaction forces of 1961 N (approximately 440 lbs).

It will be appreciated that the above velocity and speed figures are somewhat high for currently available linear servo motors. Such technology is rapidly evolving and to some extent the current invention takes into account desired linear servo motor properties. In any case, the present invention produces a useful result with current linear servo motor technology capable of velocities and forces of about half those set out above.

The positioning of the lens cutting tool 18 along its toolpath needs to be servo controlled to a very high degree of accuracy, typically within 10 nm or less. Assuming that the actuator 16 is capable of such accuracy, the magnitude of the actuating forces could cause structural defections in the lathe 10 which in themselves exceed the accuracy requirements.

The closest prior art is formed by document WO 97/13603 A. This document (cf. Fig. 10 thereof) discloses a lens cutting lathe comprising a base, a lens support mounted to the base for supporting the lens and spinning the lens about a lens rotational axis (φ), the lens support being transversely moveable (x) relative to the lens rotational axis, and two shuttles for mounting respective cutting tools mounted with respect to the base in a collinear arrangement on either side of the lens support for movement toward and away from the lens along respective collinear shuttle paths, wherein the shuttles are reciprocally moveable (zl, z2) by respective actuators mounted to the base. During the machining process the actuators are driven in opposite directions, thus serving the purpose of balancing the reaction (forces) created by the fast back-and-forth motion of the tool drive. This balance of masses is used to work the second side of the blank at the same time.

It is an object of the present invention to provide a lens cutting lathe and a method of turning a non-rotationally symmetrical lens surface on a lens turning lathe, in which vibration caused by actuator forces of a reciprocally moveable tool guidance assembly is cancelled.

## SUMMARY OF THE INVENTION

The above object is solved by the features specified in claims 1 and 7, respectively. Advantageous and appropriate developments of the invention form the subject matter of claims 2 to 6 and 8 to 12.

According to the invention a lens cutting lathe comprises a base, a lens support mounted to the base for supporting the lens and spinning the lens about a lens rotational axis ($\theta$), the lens support being transversely moveable (Y) relative to the lens rotational axis, and a plurality of shuttles for mounting respective cutting tools mounted with respect to the base in side by side arrangement on one side of the lens support for movement toward and away from the lens along respective shuttle paths (Z1-Z3; Z1-Z4) not aligned with each other whereby the cutting tools are capable of cutting the lens from one and the same side, the plurality of shuttles forming a first mass and a second mass and being reciprocally moveable by respective actuators mounted to the base, the actuators being arranged to move the first mass in a direction opposite to the second mass, and the shuttles being of similar mass and disposed and moved in a manner to maintain a generally fixed center of mass on one side of the lens support whereby movement of the first mass in a given direction substantially cancels linear forces imposed on the base by movement of the second mass in the opposite direction.

The shuttles may further be disposed and moved in a manner to also cancel rocking forces imposed on the base by said movement of the shuttles in the opposite directions.

In this instance the plurality of shuttles may consist of two outer shuttles and an intermediate shuttle therebetween, wherein the outer shuttles move together in opposite direction to the intermediate shuttle and the outer shuttles move together at a rate of about one half that of the intermediate shuttle whereby the magnitude of accelerative forces generated by the outer shuttles is generally the same as that generated by the intermediate shuttle.

According to another aspect of the present invention, the plurality of shuttles may consist of a row of four of the shuttles arranged in two pairs on either side of a central axis, the shuttles of each of said two pairs being arranged to move in opposite relative directions in phase with a corresponding shuttle of the opposite pair.

The shuttle paths may be linear and generally parallel, wherein each of said actuators is a linear servomotor.

Alternatively, the shuttle paths may be arcuate, wherein each of said actuators is a rotational servo-motor.

A method of turning a non-rotationally symmetrical lens surface on a lens turning lathe having a lens support and at least three lens cutting tools is also provided, the method comprising the steps of:

(i) mounting a lens blank to the lens support;
(ii) rotating the lens blank with the lens support about a lens rotational axis ($\theta$);
(iii) pressing one of the at least three cutting tools against the lens blank;
(iv) moving the lens blank with the lens support in a direction (Y) transverse to the lens rotational axis;
(v) reciprocally moving said one of the at least three lens cutting tools along a first tool path (Z1) at a reciprocal frequency corresponding to the rotational frequency of the lens blank to produce the non-rotationally symmetrical lens surface; and,
(vi) reciprocally moving remaining of the at least three lens cutting tools along respective tool paths (Z2, Z3; Z2-Z4) generally parallel to the first tool path (Z1) at the reciprocal frequency in a direction and at a rate which counters and substantially nullifies linear forces imposed on the lathe by said one lens cutting tool in step (v) without imparting a rocking movement on the lathe.

According to another aspect of the method for turning a non-rotationally symmetrical lens surface, the at least three lens cutting tools consist of a first and a last lens cutting tool with intermediate lens cutting tools disposed equidistantly therebetween and in line therewith, wherein the first and last lens cutting tools are moved in unison contra to the intermediate lens cutting tool at a rate of about half that of the intermediate lens cutting tool.

The lens may be turned in at least two stages with a different of the lens cutting tools utilized in each stage.

In an alternative embodiment, first, second, third and fourth lens cutting tools may be provided and arranged in line. The first and second cutting tools are moved contra to each other at a similar rate, and the third and fourth cutting tools are moved contra to each other at a similar rate, wherein any rocking motion created by the first and second cutting tools is cancelled by an equal but opposite rocking motion created by the third and fourth cutting tools.

The method may be further improved by including the further steps of:

(vii) measuring with a measuring device any resultant imbalance force on the lathe associated with the reciprocal movement of the lens cutting tools caused by associated actuators and generating an output signal indicative of the nature and the amount of the imbalance force;
(viii) sending the output signal to a processor;
(ix) determining with the processor how the force may be nullified by varying movement of the actuators and generating at least one output signal to at least one controller which communicates with and controls movement of the actuators;
(x) receiving the output signal with the controller and varying the reciprocal movement caused by the actuators in response to the output signal to reduce the resultant imbalance force.

Finally, the method may further include the further step of:

(xi) repeating the above steps (vii) through (x).

## DESCRIPTION OF THE DRAWINGS

Preferred embodiments of the invention are described below with reference to the accompanying drawings in which:

Figure 1 is an end elevation of illustrating a typical layout for a prior art single point diamond turning lathe;

Figure 2 is a front elevation corresponding to Figure 1;

Figure 3 is a front elevation illustrating a three shuttle lens cutting lathe;

Figure 4 is an end elevation corresponding to Figure 3;

Figure 5 is a front elevation illustrating a form shuttle lens cutting device according to the present invention;

Figure 6 is an end elevation corresponding to Figure 5;

Figure 7 is a longitudinal section through a typical actuator/shuttle assembly;

Figure 8 is a top plan view of an alternate lathe configuration according to the present invention;

Figure 9 is at front elevation corresponding to Figure 8;

Figure 10 is a top plan view of another alternate lathe configuration according to the present invention;

Figure 11 is a front elevation corresponding to Figure 10;

Figure 12 is a top plan view of yet another alternate lathe configuration according to the present invention; and,

Figure 13 is a front elevation corresponding to Figure 12.

## DESCRIPTION OF PREFERRED EMBODIMENTS

According to the present invention, accelerative forces arising from reciprocating movement produced by a first mass, which may include one or more shuttles is cancelled by providing a second mass and moving the second mass in a reciprocating movement contra to the reciprocating movement of the first mass. The location and rate of movement of the second mass is selected to create a "balancing" or "cancelling" force opposite to and similar is magnitude to the accelerative forces produced by the first mass. The force created by the second mass should coincide with that produced by the first mass to avoid any undesirable "rocking" motion as a result of the cancelling forces. Although the second mass may simply be present for balancing proposes, as described in more detail below, the second mass is preferably made up of two or more shuttle and lens cutting tool assemblies which may be used as part of the lens cutting operation. Similarly, the first mass preferably consists of one or more shuttle and lens cutting tool assemblies.

The term "reciprocating" is used herein to refer to a back and forth motion which may, depending on the embodiment of the present invention being described, be either linear or arcuate.

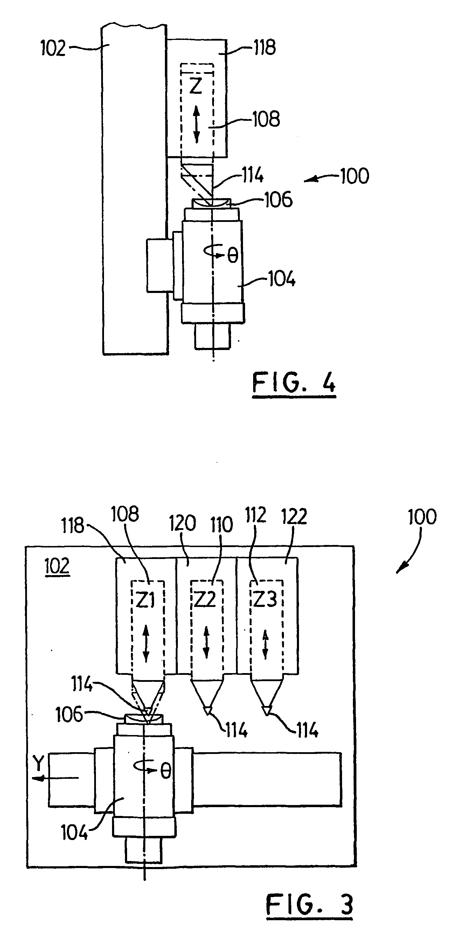

Figure 3 illustrates a lens cutting lathe 100 according to one preferred aspect of the present invention. The lens cutting lathe 100 includes a base 102 mounted to which is a lens support 104 which supports a lens 106 and is capable of spinning the lens 106 about a lens rotational axis $\theta$. The lens support is transversely moveable relative to the lens rotational axis $\theta$ as indicated by reference Y.

Three shuttles are mounted to the base 102 according to the Figures 3 and 4 embodiment. These comprise two outer shuttles 108 and 112 an intermediate shuttle 110 therebetween. Respective lens cutting tools 114 are mounted to the three shuttles 108, 110 and 112. The lens cutting tools 114 may be diamond tools of the type currently used for lens cutting.

The shuttles 108, 110 and 112 are reciprocally moveable by respective actuators 118, 120, 122 along respective shuttle axes or "paths" as indicated by references Z1, Z2 and Z3. Although the shuttle axes or paths Z1, Z2 and Z3 are shown as generally parallel to the lens rotational axis $\theta$, this is not a requirement and it may be preferable for the shuttle axes Z1, Z2 and Z3 to be inclined relative to the lens rotational axis $\theta$. The shuttle axes Z1, Z2 and Z3 should be parallel to each other. The actuators 118 and 122 are arranged to move the outer shuttles 108 and 112 in a direction opposite to the intermediate shuttle 110 at a rate half that of the intermediate shuttle 110. The respective masses of each of the outer shuttles 108 and 112 would typically be generally the same as that of the intermediate shuttle 110. The lens cutting tools 114 would also be of similar mass.

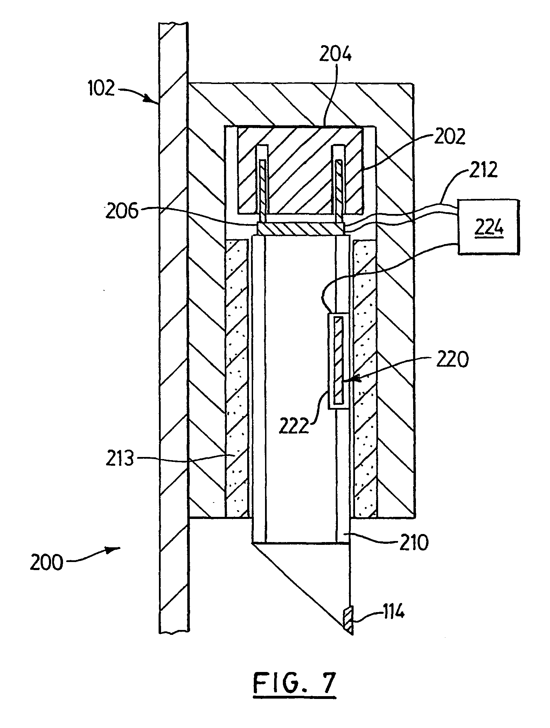

Figure 7 illustrates a typical shuttle and actuator assembly 200. The shuttle and actuator assembly 200 includes a linear servo motor 202 which includes a magnet assembly 204 and a coil 206. The magnet assembly 204 is attached to a housing 208. The coil 206 is secured to a shuttle 210. Coil wires 212 provide electrical input to the coil 206 to cause relative movement between the coil 206 and the magnet assembly 204.

The shuttle 210 is mounted to the housing 208 for linear movement. Various mounting arrangements may be utilized. A currently preferred mounting arrangement is to use air bearing pads 212 between the housing 208 and the shuttle 210 to allow for smooth, accurate linear motion.

A position encoder 220 is secured to the shuttle 210. The position encoder may be a diffraction scale readable by a read head 222 secured to the housing 208 to provide position information to a high speed feedback device 224 which senses the position of the shuttle 210 and provides input to the coil 206 to vary the position of the shuttle 210 in accordance with a pre-determined position stored in a database 226.

Force is determined by the following relationship:

$$F = m \cdot a$$

where F = force
m = mass
a = acceleration

Assuming each of the shuttles 108, 110 and 112 has a mass $m_s$, and the intermediate shuttle 110 is accelerated and decelerated by an amount $a_1$, the accelerative forces $F_i$ associated with the intermediate shuttle 110 may be defined as:

$$F_i = m_s \cdot a_i$$

The outer shuttles 108 and 112 together have a combined mass of $2\,m_s$ (the "second mass"). As the outer shuttles 108 and 112 are moved at a rate of half that of the inner shuttle 110. and in the opposite direction, the acceleration of the outer shuttles 108 and 112 is $a/2$. Accordingly, the accelerative force $F_o$ associated with the outer shuttles 112 is:

$$F_o = 2m_s \, (-a_i/2)$$

$$= m_s \cdot a_i$$

The total force $F_L$ on the lathe 102 at any time will therefore be:

$$F_L = F_i + F_o = m_s \cdot a_i - m_s \cdot a_i = 0$$

If the second mass were other than twice that of the intermediate shuttle 110 (or "first mass" in this case), the rate of acceleration would have to be compensated accordingly. In any case, the acceleration of the second mass should correspond in phase and frequency with that of the first mass and should not induce a resulting moment about the intermediate shuttle. In other words, the forces associated with the outer shuttle 108 should be the same as those associated with the outer shuttle 112. It is expected that this will usually be accomplished by centrally disposing the intermediate shuttle 110 between the outer shuttles 108 and 112. It will however be appreciated that other arrangements might work such as compensating for not having the intermediate shuttle 110 centrally disposed by varying the respective masses and accelerations of the outer shuttles 108 and 112.

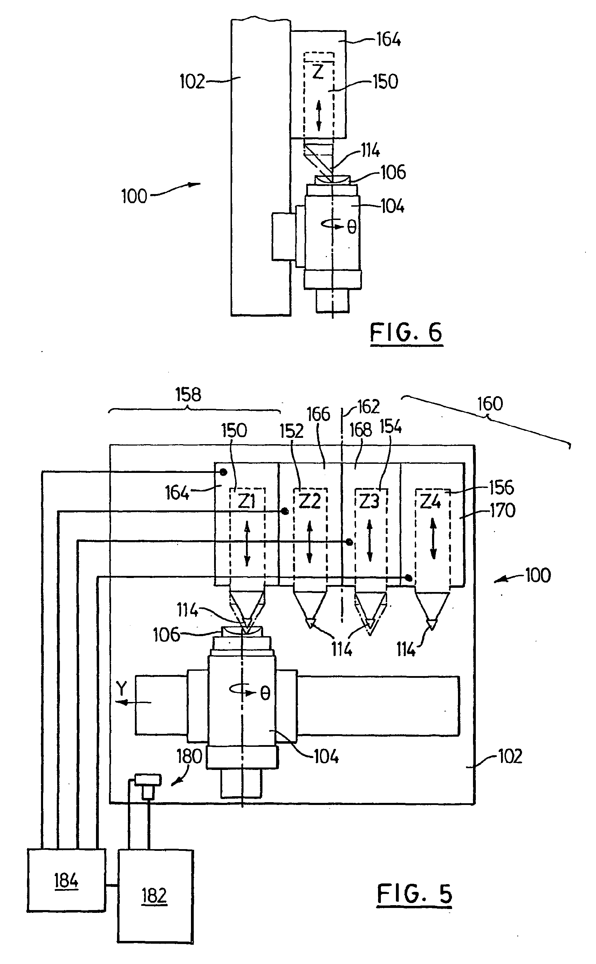

Figures 5 and 6 illustrate another embodiment of the present invention according to which four shuttles 150, 152, 154 and 156 are provided. The shuttles 150, 152, 154 and 156 are arranged in a row and may be considered as comprising two pairs of shuttles 158 and 160 respectively on opposite sides of a central axis 162, with shuttles 150 and 152 comprising a first pair 158 and shuttles 154 and 156 comprising a second pair 160.

Respective actuators 164, 166, 168 and 170 are provided for the shuttles 150, 152, 154 and 156 to move the shuttles along respective parallel shuttle axes or "paths" Z1, Z2, Z3 and Z4, all of which while shown as also parallel to the central axis 162 and lens rotational axis θ need not be so. The respective shuttles 150 and 152 of the first pair 158 are arranged to move in opposite relative directions. Similarly, the respective shuttles 154 and 156 of the second pair 160 are arranged to move in opposite relative directions, but in phase with the first pair 158. In other words, the shuttle 150 would move together with (i.e. in the same direction as) one of the shuttles 154 and 156. Simultaneously, and in the opposite direction, the shuttle 152 would move together with the other of the shuttles 154 and 156.

In the four shuttle embodiment, the total mass of the shuttles moving in either direction is similar and accordingly the rate of acceleration would be similar. An advantage to the four shuttle embodiment is that the stroke length over which each of the shuttles 150, 152, 154 and 156 moves would be similar.

In the three shuttle embodiment, using the lens cutting tool 114 associated with the outer shuttles 108 and 112 may, in extreme cases, require a longer compensatory stroke than available from the intermediate shuttle 110. For example, if the actuator has a 30 mm stroke limit and a 20 mm stroke is required for the outer shuttles, the intermediate shuttle 110 wouldn't be able to deliver the requisite 40 mm stroke for full cancellation of reciprocally acting forces. It is expected however that this can be tolerated as stroke length diminishes toward the lens axis θ where tolerances are most critical. Accordingly, good force resolution should be possible in the more critical zone nearer the lens rotational axis θ.

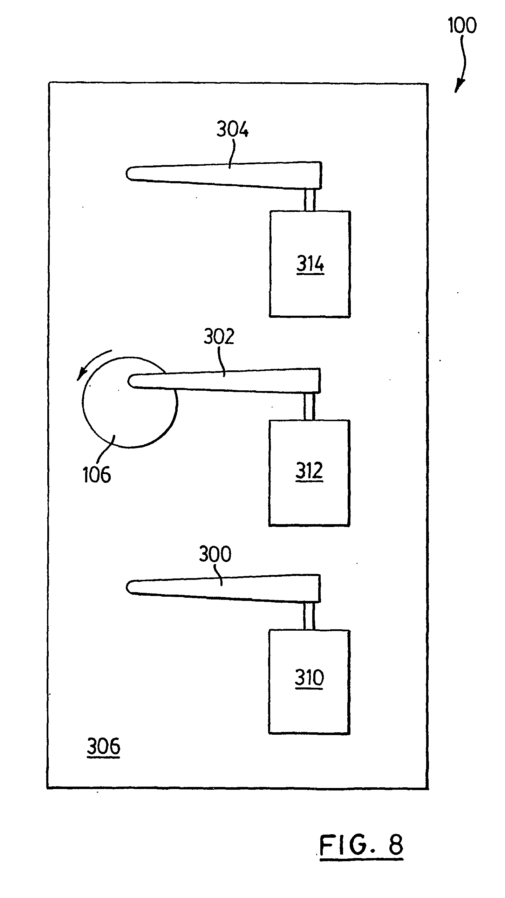

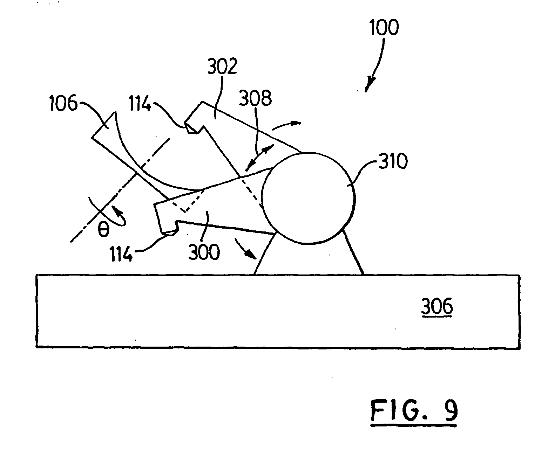

Figures 8 and 9 illustrate yet another embodiment of the present invention somewhat analogous to the embodiment described above with respect to Figures 3 and 4. In the Figures 8 and 9 embodiment, a lathe 100 has respective outer shuttles 300 and 304 and an inner shuttle 302 mounted to a base 306 for reciprocal movement along respective arcuate paths, as exemplified by arrow 308 in Figure 9. The shuttles 300, 302 and 304 are moved by respective actuators 310, 312 and 314, which may be rotational servo-motors.

As with the Figures 3 and 4 embodiment, the actuators 310 and 314 are arranged to move the outer shuttles, 300 and 304 respectively, in a direction opposite that of the intermediate shuttle 302 and at a rate half that of the rate of movement of intermediate shuttle 302. The respective masses in each of the outer shuttles 300 and 304 would typically be about the same as that of the intermediate shuttle 302. Respective lens cutting tools 114 would also be of similar mass. Accordingly, forces imparted by movement of the intermediate shuttle 302 would be cancelled by similar forces imparted by movement of the outer shuttles 300 and 304.

The arrangement illustrated in Figures 8 and 9 could of course be expanded to more than three actuator/ shuttle assemblies, for example, in a manner analogous to the four shuttle embodiment described above with reference to Figures 5 and 6.

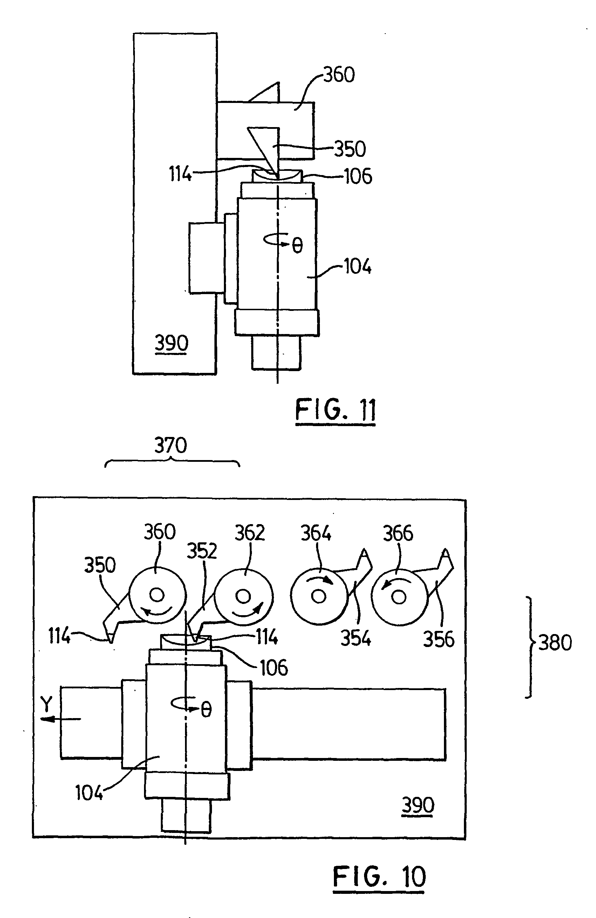

Although the shuttle arrangement shown in Figures 8 and 9 features the shuttle actuators disposed along a common rotational axis parallel to a base, in certain cases the shuttle actuators may be disposed with respective rotational axes perpendicular (or possibly at some other angle) to the base. Figures 10, 11, 12 and 13 illustrate two embodiments of the latter type.

In the Figures 10 and 11 embodiment, four shuttles, 350, 352, 354 and 356 are provided. The shuttles 350, 352, 354 and 356 have respective actuators 360, 362, 364 and 366 which may be servo motors. Analogous to the Figures 5 and 6 embodiment, the shuttles 350 and 352 comprise a first pair 370 and the shuttles 354 and 356 comprise a second pair 380. The shuttles 350 and 352 of the first pair 370 are arranged to move in opposite relative directions parallel to a base 390. The shuttles 354 and 356 of the second pair 380 are also arranged to move in opposite relative directions parallel to the base 390, but in-phase with the first pair 370.

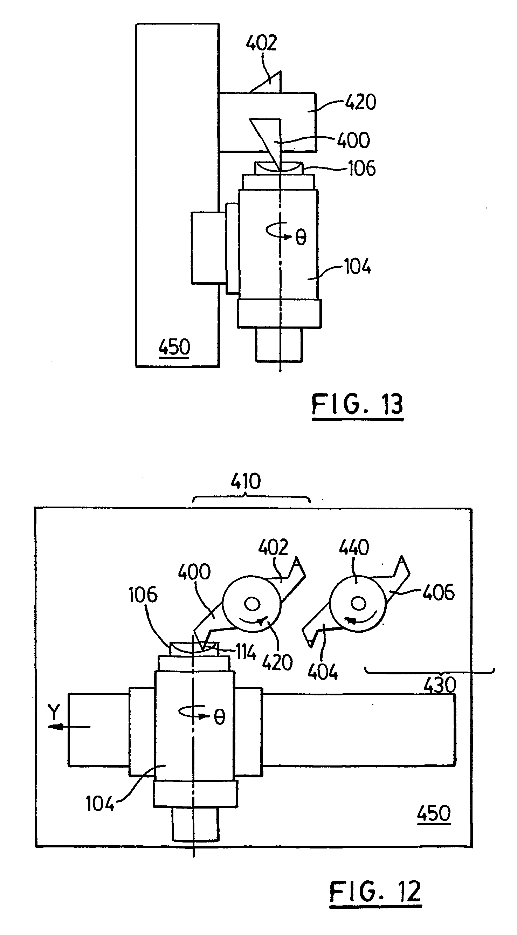

Figures 12 and 13 illustrate a four shuttle embodiment similar to that illustrated in Figures 11 and 12, but having one actuator for each pair of shuttles. According to the Figures 12 and 13 embodiment, four shuttles, 400, 402, 404 and 406 are provided. The shuttles 400 and 402 comprise a first pair 410 and are radially disposed on opposite sides of an actuator 420 which may be a rotary servo motor. The shuttles 404 and 406 comprise a second pair 430 disposed on opposite sides of an actuator 440. The actuators 420 and 440 are mounted to a base 450 and rotate the shuttles 400, 402, 404 and 406 in arcuate paths parallel to the base 450.

The effect of mounting a pair of shuttles in a radially disposed configuration on opposite sides of a single actuator is much the same from a force cancellation perspective as having a pair of shuttles mounted to separate actuators moving in opposite relative directions.

Use of a rotary servo-motor generates both a rotational and a linear resultant force when the actuator/ shuttle assemblies are not balanced. A linear resultant will be observed if the imbalance masses are 180 degrees out of phase. A rotational resultant will be observed if the imbalance masses are in phase. If the actuators are contra rotating the phase angle will constantly change giving both linear and rotational resultant forces.

In view of the more complex nature of the resultant forces arising in use of rotational actuators not having a common rotational axis, it would be quite complicated to eliminate resultant imbalance with a third actuator. Having four actuators or four shuttles mounted in two pairs to rotationally balance two actuators does however provide a substantially self-cancelling arrangement.

In order to compensate for minor variances resulting from such things as differences in combined shuttle and lens cutting tool mass or small amounts of asymmetricality in shuttle positioning, it may be desirable to monitor forces and make compensatory inputs to the actuators. Figure 5 schematically illustrates one manner in which such a compensation may be effected.

A measuring device 180 connected to the lathe 100 which measures any resultant imbalance force on the lathe 100 which is associated with the reciprocal movement of the lens cutting tools 114 and generates an output signal indicative of the nature and amount of imbalance force. The measuring device may be any suitable device such as one or more load cells or accelerometers. The measuring device may be connected to any suitable part of the lathe 100 such as the base 102 or the actuators 164, 166, 168 and 170.

The output signal is sent to a processor 182 which determines the nature of the force and whether and how it can be nullified by varying movement of the actuators 164, 166, 168 and 170. Factors such as direction and phase of the imbalance force might be considered by the processor 182. The processor 182 generates and sends one or more output signals to one or more controllers 184 which communicates with and control the movement of the actuators 164,166, 168 and 170.

The controller(s) 184 receive(s) the output signal(s) and vary the reciprocating movement caused by the actuators 164, 166, 168 and 170 in response to the output signal(s) to reduce the resultant imbalance force. The monitoring and compensation may be repeated at least periodically.

Depending on the degree of balance and any harmonic frequencies associated with the spindle rotation, it may prove more effective to do an "air pass" i.e. without cutting and while holding the spindle stationary. This could be repeated for each shuttle/actuator selected for cutting in tum as the dynamics may be slightly different for each shuttle/actuator combination selected for cutting at any given time. The variances might be stored by the processor to provide an initial setting and minimize set-up time.

The above description is intended in an illustrative rather than a restrictive sense. Variations to the embodiments described may be apparent to persons skilled in such structures without departing from the scope of the invention as defined by the claims set out below.

**Claims**

1. A lens cutting lathe (100) comprising:

    a base (102; 306; 390; 450);
    a lens support (104) mounted to said base (102; 306; 390; 450) for supporting said lens (106) and spinning said lens (106) about a lens rotational axis (θ) said lens support (104) being transversely moveable (Y) relative to said lens rotational axis (θ);
    a plurality of shuttles (108-112; 150-156; 300-304; 350-356; 400-406) for mounting respective cutting tools (114) mounted with respect to said base (102; 306; 390; 450) in side by side arrangement on one side of said lens support (104) for movement toward and away from said lens (106) along respective shuttle paths (Z1-Z3; Z1-Z4; 308) not aligned with each other whereby said cutting tools (114) are capable of cutting said lens (106) from one and the same side;
    said plurality of shuttles (108-112; 150-156; 300-304; 350-356; 400-406) forming a first mass and a second mass and being reciprocally moveable by respective actuators (118-122; 164-170; 310-314; 360-366; 420, 440) mounted to said base (102; 306; 390; 450), said actuators (118-122; 164-170; 310-314; 360-366; 420, 440) being arranged to move said first mass in a direction opposite to said second mass; and,
    said shuttles (108-112; 150-156; 300-304; 350-356; 400-406) being of similar mass and disposed and moved in a manner to maintain a generally fixed center of mass on one side of said lens support (104) whereby movement of said first mass in a given direction substantially cancels linear forces imposed on said base (102; 306; 390; 450) by movement of said second mass in the opposite direction.

2. A lens cutting lathe (100) as claimed in claim 1 wherein:

    said shuttles (108-112; 150-156; 300-304; 350-356; 400-406) are further disposed and moved in a manner to also cancel rocking forces imposed on said base (102; 306; 390; 450) by said movement of said shuttles (108-112; 150-156; 300-304; 350-356; 400-406) in said opposite directions.

3. A lens cutting lathe (100) as claimed in claim 2 wherein:

    said plurality of shuttles (108-112; 300-304) consists of two outer shuttles (108, 112; 300, 304) and an intermediate shuttle (110; 302) therebetween;
    said outer shuttles (108, 112; 300, 304) move together in opposite direction to said intermediate shuttle (110; 302); and
    said outer shuttles (108, 112; 300, 304) move together at a rate of about one half that of said intermediate shuttle (110; 302) whereby the magnitude of accelerative forces generated by said outer shuttles (108, 112; 300, 304) is generally the same as that generated by said intermediate shuttle (110; 302).

4. A lens cutting lathe (100) as claimed in claim 2 wherein:

    said plurality of shuttles consists of a row of four of said shuttles (150-156; 350-356; 400-406) arranged in two pairs (158, 160; 370, 380; 410, 430) on either side of a central axis (162), said shuttles of each of said two pairs being arranged to move in opposite relative directions in phase with a corresponding shuttle of said opposite pair.

5. A lens cutting lathe (100) as claimed in claim 3 or 4 wherein:

    said shuttle paths (Z1-Z3; Z1-Z4) are linear and generally parallel; and,
    each of said actuators (118-122; 164-170) is a linear servo-motor.

6. A lens cutting lathe (100) as claimed in claim 3 or 4 wherein:

    said shuttle paths (308) are arcuate; and,
    each of said actuators (310-314; 360-366; 420, 440) is a rotational servo-motor.

7. A method of turning a non-rotationally symmetrical lens surface on a lens turning lathe (100) having a lens support (104) and at least three lens cutting tools (114), said method comprising the steps of:

    (i) mounting a lens blank (106) to said lens support (104);
    (ii) rotating said lens blank (106) with said lens support (104) about a lens rotational axis (θ);
    (iii) pressing one of said at least three cutting tools (114) against said lens blank (106);
    (iv) moving said lens blank (106) with said lens support (104) in a direction (Y) transverse to said lens rotational axis (θ);
    (v) reciprocally moving said one of said at least three lens cutting tools (114) along a first tool path (Z1) at a reciprocal frequency corresponding to the rotational frequency of said lens blank (106) to produce said non-rotationally symmetrical lens surface; and,

(vi) reciprocally moving remaining of said at least three lens cutting tools (114) along respective tool paths (Z2, Z3; Z2-Z4) generally parallel to said first tool path (Z1) at said reciprocal frequency in a direction and at a rate which counters and substantially nullifies linear forces imposed on said lathe (100) by said one lens cutting tool (114) in step (v) without imparting a rocking movement on said lathe (100).

8. A method according to claim 7 wherein:

said at least three lens cutting tools (114) consist of a first and a last lens cutting tools with intermediate lens cutting tools disposed equidistantly therebetween and in line therewith; and, said first and last lens cutting tools are moved in unison contra to said intermediate lens cutting tool at a rate of about half that of said intermediate lens cutting tool.

9. A method according to claim 8 wherein:

said lens (106) is turned in at least two stages with a different of said lens cutting tools (114) utilized in each stage.

10. A method according to claim 7 wherein:

first, second, third and fourth lens cutting tools (114) are provided and arranged in line; said first and second cutting tools are moved contra to each other at a similar rate; said third and fourth cutting tools are moved contra to each other at a similar rate; and any rocking motion created by said first and second cutting tools is cancelled by an equal but opposite rocking motion created by said third and fourth cutting tools.

11. A method according to claim 8, 9 or 10 including the further steps of:

(vii) measuring with a measuring device (180) any resultant imbalance force on said lathe (100) associated with said reciprocal movement of said lens cutting tools (114) caused by associated actuators (164-170) and generating an output signal indicative of the nature and the amount of said imbalance force;
(viii) sending said output signal to a processor (182);
(ix) determining with said processor (182) how said force may be nullified by varying movement of said actuators (164-170) and generating at least one output signal to at least one controller (184) which communicates with and controls movement of said actuators (164-170);
(x) receiving said output signal with said controller (184) and varying said reciprocal movement caused by said actuators (164-170) in response to said output signal to reduce said resultant imbalance force.

12. A method according to claim 11 including the further step of:

(xi) repeating steps (vii) through (x).

**Patentansprüche**

1. Drehmaschine (100) zum Linsenschneiden, mit:

einem Bett (102; 306; 390; 450);
einer Linsenhalterung (104), die an dem Bett (102; 306; 390; 450) befestigt ist, um die Linse (106) zu halten und die Linse (106) um eine Linsendrehachse (θ) zu drehen, wobei die Linsenhalterung (104) relativ zu der Linsendrehachse (θ) quer bewegbar (Y) ist;
einer Mehrzahl von Pendeleinrichtungen (108-112; 150-156; 300-304; 350-356; 400-406) zur Befestigung jeweiliger Schneidwerkzeuge (114), die in Bezug auf das Bett (102; 306; 390; 450) nebeneinander auf einer Seite der Linsenhalterung (104) zur Bewegung auf die Linse (106) zu und von dieser weg entlang jeweiliger, nicht miteinander ausgefluchteter Pendelwege (Z1-Z3; Z1-Z4; 308) befestigt sind, wodurch die Schneidwerkzeuge (114) fähig sind, die Linse (106) von ein und derselben Seite zu schneiden;

wobei die Mehrzahl von Pendeleinrichtungen (108-112; 150-156; 300-304; 350-356; 400-406) eine erste Masse und eine zweite Masse bilden und durch jeweilige Aktuatoren (118-122; 164-170; 310-314; 360-366; 420, 440), die an dem Bett (102; 306; 390; 450) befestigt sind, vor und zurück bewegbar sind, wobei die Aktuatoren (118-122; 164-170; 310-314; 360-366; 420, 440) angeordnet sind, um die erste Masse in eine Richtung entgegengesetzt zu der zweiten Masse zu bewegen; und
wobei die Pendeleinrichtungen (108-112; 150-156; 300-304; 350-356; 400-406) von ähnlicher Masse und auf eine Weise angeordnet sind und bewegt werden, dass ein im Allgemeinen feststehender Massenmittelpunkt auf einer Seite der Linsenhalterung (104) beibehalten wird, wodurch eine Bewegung der ersten Masse in eine gegebene Richtung lineare Kräfte im Wesentlichen aufhebt, die durch eine Bewegung der zweiten Masse in die entgegengesetzte Richtung auf das Bett (102; 306; 390; 450) ausgeübt werden.

**2.** Drehmaschine (100) zum Linsenschneiden nach Anspruch 1, wobei:

die Pendeleinrichtungen (108-112; 150-156; 300-304; 350-356; 400-406) ferner auf eine Weise angeordnet sind und bewegt werden, dass auch durch die Bewegung der Pendeleinrichtungen (108-112; 150-156; 300-304; 350-356; 400-406) in die entgegengesetzten Richtungen auf das Bett (102; 306; 390; 450) ausgeübte Kippkräfte aufgehoben werden.

**3.** Drehmaschine (100) zum Linsenschneiden nach Anspruch 2, wobei:

die Mehrzahl von Pendeleinrichtungen (108-112; 300-304) aus zwei äußeren Pendeleinrichtungen (108, 112; 300, 304) und einer Zwischen-Pendeleinrichtung (110; 302) dazwischen besteht;
die äußeren Pendeleinrichtungen (108, 112; 300, 304) sich gemeinsam in entgegengesetzter Richtung zu der Zwischen-Pendeleinrichtung (110; 302) bewegen; und
die äußeren Pendeleinrichtungen (108, 112; 300, 304) sich gemeinsam ungefähr mit der halben Geschwindigkeit der Zwischen-Pendeleinrichtung (110; 302) bewegen, wodurch die Größenordnung der durch die äußeren Pendeleinrichtungen (108, 112; 300, 304) erzeugten Beschleunigungskräfte im Allgemeinen gleich den durch die Zwischen-Pendeleinrichtung (110; 302) erzeugten Kräften ist.

**4.** Drehmaschine (100) zum Linsenschneiden nach Anspruch 2, wobei:

die Mehrzahl von Pendeleinrichtungen aus einer Reihe von vier Pendeleinrichtungen (150-156; 300-356; 400-406) besteht, die in zwei Paaren (158, 160; 370, 380; 410, 430) auf beiden Seiten einer Mittelachse (162) angeordnet sind, wobei die Pendeleinrichtungen jedes der zwei Paare derart angeordnet sind, dass sie sich in entgegengesetzten Relativrichtungen phasengleich mit einer entsprechenden Pendeleinrichtung des gegenüberliegenden Paars bewegen.

**5.** Drehmaschine (100) zum Linsenschneiden nach Anspruch 3 oder 4, wobei:

die Pendelwege (Z1-Z3; Z1-Z4) linear und im Allgemeinen parallel sind; und
jeder der Aktuatoren (118-122; 164-170) ein linearer Servomotor ist.

**6.** Drehmaschine (100) zum Linsenschneiden nach Anspruch 3 oder 4, wobei:

die Pendelwege (308) bogenförmig sind; und
jeder der Aktuatoren (310-314; 360-366; 420, 440) ein rotativer Servomotor ist.

**7.** Verfahren zum Drehen einer nicht-rotationssymmetrischen Linsenfläche auf einer Drehmaschine (100) zum Linsenschneiden, die eine Linsenhalterung (104) und mindestens drei Linsenschneidwerkzeuge (114) hat, wobei das Verfahren die folgenden Schritte aufweist:

(i) Befestigen eines Linsenrohlings (106) an der Linsenhalterung (104);
(ii) Drehen des Linsenrohlings (106) mit der Linsenhalterung (104) um eine Linsendrehachse (θ);
(iii) Drücken eines der mindestens drei Schneidwerkzeuge (114) gegen den Linsenrohling (106);
(iv) Bewegen des Linsenrohlings (106) mit der Linsenhalterung (104) in eine Richtung (Y) quer zu der Linsendrehachse (θ);
(v) Vor- und Zurückbewegen des einen der mindestens drei Linsenschneidwerkzeuge (114) entlang eines ersten Werkzeugwegs (Z1) mit einer Vor- und Zurückbewegungsfrequenz entsprechend der Drehzahl des Linsenrohlings (106), um die nichtrotationssymmetrische Linsenfläche herzustellen; und
(vi) Vor- und Zurückbewegen der verbleibenden der mindestens drei Linsenschneidwerkzeuge (114) entlang jeweiliger Werkzeugwege (Z2, Z3; Z2-Z4) im Allgemeinen parallel zu dem ersten Werkzeugweg (Z1) mit der Vor- und Zurückbewegungsfrequenz in eine Richtung und mit einer Geschwindigkeit, die den durch das eine Linsenschneidwerkzeug (114) im Schritt (v) auf die Drehmaschine (100) ausgeübten linearen Kräften entgegenwirkt und diese im Wesentlichen aufhebt, ohne eine Kippbewegung an der Drehmaschine (100) zu erzeugen.

**8.** Verfahren nach Anspruch 7, wobei:

die mindestens drei Linsenschneidwerkzeuge (114) aus einem ersten und einem letzten Linsenschneidwerkzeug mit Zwischen-Linsenschneidwerkzeugen bestehen, die gleich weit voneinander beabstandet zwischen diesen und in einer Linie mit diesen angeordnet sind; und das erste und das letzte Linsenschneidwerkzeug gleichzeitig entgegen dem Zwischen-Linsenschneidwerkzeug mit einer Geschwindigkeit bewegt werden, die ungefähr halb so groß wie die des Zwischen-Linsenschneidwerkzeugs ist.

**9.** Verfahren nach Anspruch 8, wobei:

die Linse (106) in mindestens zwei Stufen gedreht wird, wobei in jeder Stufe ein anderes der Linsenschneidwerkzeuge (114) verwendet wird.

**10.** Verfahren nach Anspruch 7, wobei:

ein erstes, zweites, drittes und viertes Linsenschneidwerkzeug (114) vorgesehen und in einer Reihe angeordnet sind;

das erste und das zweite Linsenschneidwerkzeug bei einer ähnlichen Geschwindigkeit gegeneinander bewegt werden;

das dritte und das vierte Linsenschneidwerkzeug bei einer ähnlichen Geschwindigkeit gegeneinander bewegt werden; und

jede durch das erste und zweite Schneidwerkzeug erzeugte Kippbewegung durch eine von dem dritten und vierten Schneidwerkzeug erzeugte gleichartige, aber entgegengesetzte Kippbewegung aufgehoben wird.

**11.** Verfahren nach Anspruch 8, 9 oder 10, das die folgenden weiteren Schritte aufweist:

(vii) Messen mittels einer Messeinrichtung (180) jeder resultierenden Unwuchtkraft an der Drehmaschine (100), die mit der durch die zugeordneten Aktuatoren (164-170) verursachten Vor- und Zurückbewegung der Linsenschneidwerkzeuge (114) verbunden ist, und Erzeugen eines Ausgangssignals, das die Beschaffenheit und den Betrag der Unwuchtkraft kennzeichnet;

(viii) Senden des Ausgangssignals zu einem Prozessor (182);

(ix) Bestimmen mittels des Prozessors (182), auf welche Weise die Kraft durch veränderte Bewegung der Aktuatoren (164-170) aufgehoben werden kann, und Erzeugen mindestens eines Ausgangssignals an mindestens eine Steuereinrichtung (184), welche mit den Aktuatoren (164-170) kommuniziert und deren Bewegungen steuert;

(x) Empfangen des Ausgangssignals mittels der Steuereinrichtung (184) und Verändern der durch die Aktuatoren (164-170) verursachten Vor- und Zurückbewegung in Antwort auf das Ausgangssignal, um die resultierende Unwuchtkraft zu reduzieren.

**12.** Verfahren nach Anspruch 11, das ferner den Schritt aufweist:

(xi) Wiederholen der Schritte (vii) bis (x).

**Revendications**

**1.** Tour à verres optiques (100) comprenant :

une base (102 ; 306 ; 390 ; 450) ;

un support de verre optique (104) monté sur ladite base (102 ; 306 ; 390 ; 450) pour supporter ledit verre optique (106) et faisant tourner ledit verre optique (106) autour d'un axe de rotation de verre optique (θ), ledit support de verre optique (104) étant mobile transversalement (Y) par rapport audit axe de rotation de verre optique (θ) ;

une pluralité de navettes (108 à 112 ; 150 à 156 ; 300 à 304 ; 350 à 356 ; 400 à 406) pour un montage respectif d'outils de découpe (114) montés par rapport à ladite base (102 ; 306 ; 390 ; 450) dans un agencement côte à côte sur un côté dudit support de verre optique (104) pour un rapprochement et un éloignement dudit verre optique (106) le long des trajets de navettes respectifs (Z1 à Z3 ; Z1 à Z4 ; 308) non alignés les uns avec les autres, lesdits outils de découpe (114) étant capables de découper ledit verre optique (106) d'un seul et même côté ;

ladite pluralité de navettes (108 à 112 ; 150 à 156 ; 300 à 304 ; 350 à 356 ; 400 à 406) formant une première masse et une seconde masse et pouvant être déplacée en va-et-vient par des actionneurs respectifs (118 à 122 ; 164 à 170 ; 310 à 314 ; 360 à 366 ; 420, 440) montés sur ladite base (102 ; 306 ; 390 ; 450), lesdits actionneurs (118 à 122 ; 164 à 170 ; 310 à 314 ; 360 à 366 ; 420, 440) étant agencés pour déplacer ladite première masse dans une direction opposée à ladite seconde masse ; et

lesdites navettes (108 à 112 ; 150 à 156 ; 300 à 304 ; 350 à 356 ; 400 à 406) étant de masse similaire et étant disposées et déplacées de manière à conserver un centre de masse généralement fixe sur un côté dudit support de verre optique (104), moyennant quoi le mouvement de ladite première masse dans une direction donnée annule sensiblement les forces linéaires imposées à ladite base (102 ; 306 ; 390 ; 450) par un déplacement de ladite seconde masse dans la direction opposée.

**2.** Tour à verres optiques (100) selon la revendication 1, dans lequel :

lesdites navettes (108 à 112 ; 150 à 156 ; 300 à 304 ; 350 à 356 ; 400 à 406) sont en outre disposées et déplacées de manière à également annuler les forces de balancement imposées à ladite base (102 ; 306 ; 390 ; 450) par ledit mouvement desdites navettes (108 à 112 ; 150 à 156 ; 300 à 304 ; 350 à 356 ; 400 à 406) dans lesdites directions opposées.

3. Tour à verres optiques (100) selon la revendication 2, dans lequel :

ladite pluralité de navettes (108 à 112 ; 300 à 304) est constituée de deux navettes externes (108 à 112 ; 300, 304) et d'une navette intermédiaire (110 ; 302) située entre elles ;
lesdites navettes externes (108, 112 ; 300, 304) se déplaçant ensemble dans une direction opposée à ladite navette intermédiaire (110 ; 302) ; et
lesdites navettes externes (108, 112 ; 300, 304) se déplaçant ensemble à une vitesse d'environ la moitié de celle de ladite navette intermédiaire (110 ; 302), moyennant quoi l'intensité des forces d'accélération générées par lesdites navettes externes (108, 112 ; 300, 304) étant généralement identique à celle générée par ladite navette intermédiaire (110 ; 302).

4. Tour à verres optiques (100) selon la revendication 2, dans lequel :

ladite pluralité de navettes est constituée d'une rangée de quatre desdites navettes (150 à 156 ; 350 à 356 ; 400 à 406) agencées en deux paires (158, 160 ; 370, 380 ; 410, 430) de chaque côté d'un axe central (162), lesdites navettes de chacune desdites deux paires étant agencées pour se déplacer dans des directions relatives opposées en phase avec une navette correspondante de ladite paire opposée.

5. Tour à verres optiques (100) selon la revendication 3 ou 4, dans lequel :

lesdits trajets de navette (Z1 à Z3 ; Z1 à Z4) sont linéaires et généralement parallèles ; et
chacun desdits actionneurs (118 à 122 ; 164 à 170) est un servomoteur linéaire.

6. Tour à verres optiques (100) selon la revendication 3 ou 4, dans lequel :

lesdits trajets de navette (308) sont courbes ; et
chacun desdits actionneurs (310 à 314 ; 360 à 366 ; 420, 440) est un servomoteur rotatif.

7. Procédé de tournage d'une surface de verre optique non rotativement symétrique sur un tour à verres optiques (100) comportant un support de lentille (104) et au moins trois outils de découpe de verre optique (114), ledit procédé comprenant les étapes consistant à :

(i) monter une ébauche de verre optique (106) sur ledit support de verre optique (104) ;
(ii) faire tourner ladite ébauche de verre optique (106) avec ledit support de verre optique (104) autour d'un axe de rotation de verre optique (θ) ;
(iii) presser l'un desdits au moins trois outils de découpe (114) contre ladite ébauche de verre optique (106) ;
(iv) déplacer ladite ébauche de verre optique (106) avec ledit support de verre optique (104) dans une direction (Y) transversale audit axe de rotation de verre optique (θ) ;
(v) déplacer en va-et-vient ledit outil parmi lesdits au moins trois outils de découpe de verre optique (114) le long d'un premier trajet d'outil (Z1) à une fréquence de va-et-vient correspondant à la fréquence de rotation de ladite ébauche de verre optique (106) pour produire ladite surface de verre optique non rotativement symétrique ; et
(vi) déplacer en va-et-vient le reste desdits au moins trois outils de découpe (114) le long de trajets d'outil respectifs (Z2, Z3 ; Z2 à Z4) généralement parallèles audit premier trajet d'outil (Z1) à ladite fréquence de va-et-vient dans une direction et à une vitesse qui compense et annule sensiblement les forces linéaires imposées audit tour (100) par ledit outil de découpe de verre optique (114) à l'étape (v) sans conférer de mouvement de balancement audit tour (100).

8. Procédé selon la revendication 7, dans lequel :

lesdits au moins trois outils de découpe de verre optique (114) sont constitués d'un premier et d'un dernier outil de découpe de verre optique avec des outils de découpe de verre optique intermédiaires disposés à équidistance entre eux et alignés avec eux ; et
lesdits premier et dernier outils de découpe de verre optique sont déplacés à l'unisson à l'encontre dudit outil de découpe de verre optique intermédiaire à une vitesse d'environ la moitié de celle dudit outil de découpe de verre optique intermédiaire.

9. Procédé selon la revendication 8, dans lequel :

ledit verre optique (106) est tourné dans au moins deux stades avec un outil différent parmi lesdits outils de découpe de verre optique (114) utilisés dans chaque stade.

10. Procédé selon la revendication 7, dans lequel :

des premier, deuxième, troisième et quatrième outils de découpe de verre optique (114) sont prévus et agencés en ligne ;
lesdits premier et deuxième outils de découpe sont déplacés l'un contre l'autre à une vitesse similaire ;

lesdits troisième et quatrième outils de découpe sont déplacés l'un contre l'autre à une vitesse similaire ; et

tout mouvement de balancement créé par lesdits premier et deuxième outils de découpe est annulé par un mouvement de balancement égal mais opposé créé par lesdits troisième et quatrième outils de découpe.

**11.** Procédé selon la revendication 8, 9 ou 10, comprenant les étapes supplémentaires consistant à :

(vii) mesurer avec un dispositif de mesure (180) toute force de déséquilibre résultante sur ledit tour (100) associée audit mouvement de va-et-vient desdits outils de découpe de verre optique (114) provoqué par des actionneurs associés (164 à 170) et générant un signal de sortie indiquant la nature et la quantité de ladite force de déséquilibre ;

(viii) envoyer ledit signal de sortie à un processeur (182) ;

(ix) déterminer à l'aide dudit processeur (182) la façon dont ladite force peut être annulée par une variation du mouvement desdits actionneurs (164 à 170) et une génération d'au moins un signal de sortie vers au moins un dispositif de commande (184) qui communique avec lesdits actionneurs (164 à 170) et commande leur mouvement ;

(x) recevoir ledit signal de sortie avec ledit dispositif de commande (184) et faire varier ledit mouvement de va-et-vient provoqué par lesdits actionneurs (164 à 170) en réponse audit signal de sortie pour réduire ladite force de déséquilibre résultante.

**12.** Procédé selon la revendication 11, comprenant l'étape supplémentaire consistant à :

(xi) répéter les étapes (vii) à (x).

16

Z

14

18

10

24

22

21

23

θ

20

25

## FIG. 1
### (PRIOR ART)

16

25

Z Z

14

22

18

21

24

20

10

Y

θ

23

## FIG. 2
### (PRIOR ART)

FIG. 4

FIG. 3

FIG. 6

FIG. 5

FIG. 7

FIG. 8

FIG. 9

FIG. 11

FIG. 10

**FIG. 13**

**FIG. 12**

**EP 1 305 136 B1**

**Patent documents cited in the description**

- WO 9713603 A